# EUROPEAN PATENT SPECIFICATION

(11) **EP 3 456 400 B1**
(45) Date of publication and mention of the grant of the patent: **24.03.2021**
(21) Application number: 18191026.6
(22) Date of filing: 27.08.2018
(51) Int. Cl.: B01D 36/04, B01D 29/11, B01D 29/94

(54) **FILTER ARRANGEMENT**
FILTERANORDNUNG
AGENCEMENT DE FILTRE

(30) Priority: 19.09.2017 DE 102017121647
(43) Date of publication of application: 20.03.2019
(73) Proprietor: Illinois Tool Works Inc., Glenview, IL 60025 (US)
(72) Inventor: Hauk, Torsten, 31535 Neustadt (DE); Gramss, Rainer, 29690 Buchholz (DE)
(74) Representative: HGF

(56) References cited:
- EP-A2- 0 393 277
- JP-U- H0 639 107
- SU-A1- 1 421 890
- US-A- 1 685 655
- US-A1- 2005 103 700

## Description

The invention relates to a filter arrangement for a liquid-conducting system, preferably a cooling circuit of an engine, comprising a filter housing with an inlet and an outlet for liquid flowing along a flow path through the filter housing, furthermore comprising a filter which is arranged in the filter housing in the flow path of the liquid for filtering dirt particles out of the liquid.

Such filter arrangements are used for example in cooling circuits of internal combustion engines of cars or trucks. Engine components such as the engine block are often produced by casting methods. Especially in the case of cast aluminum parts, lost sand casting molds are used, in order to be able to produce even complicated geometries by casting techniques. Despite costly cleaning methods for the cast parts produced, it is not possible in practice to avoid sand residues remaining in engine components. Such dirt particles, for example when present in cooling liquid lines of the engine, result in undesirable wear, even to the extent of a malfunction or leakage in the liquid-conducting system. Therefore, it is known to arrange filters in the cooling liquid lines of the cooling circuit of the engine to filter out such dirt particles. Over time, however, there occurs a clogging of the filter with accumulating dirt particles. This impairs the filter function and in the worst case may impair the cooling function of the cooling circuit.

In one example, JP H06 39 107 U describes a filter arrangement including a housing, an inlet and an outlet, and a filter cartridge arranged to filter dirt particles, the filter arrangement also including a partition plate that has a honeycomb-type structure. Other filter arrangements are described in EP 0 393 277 A2, US 1,685,655, SU 1421890 A1 and US 2005/0103700 A1.

One problem which the invention proposes to solve is to provide a filter arrangement of the kind mentioned above which reliably filters out dirt particles from the cooling liquid and at the same time assures a long service life of the filter and a reliable cooling effect of the cooling circuit at all times.

Advantageous embodiments are found in the dependent claims, the specification, and the figures.

For a filter arrangement of the kind mentioned above, the invention solves the problem by a collecting chamber which is arranged upstream of the filter and into which dirt particles which are filtered out by the filter drop because of gravity when liquid no longer flows through the filter housing, wherein the collecting chamber forms a dead space, and therefore dirt particles located in the collecting chamber are not entrained by liquid flowing through the filter housing.

The filter arrangement according to the invention may be used for example in the cooling circuit of an engine of a motor vehicle, such as a car or truck. The engine may be an internal combustion engine. However, the engine may also be, for example, an electric motor. The liquid flowing through the filter arrangement is then in particular a cooling liquid. The liquid may be cooling water, for example.

In the filter housing of the filter arrangement is found a filter for filtering out dirt particles from the liquid. The filter may have a conical or cylindrical shape, for example. However, other filter geometries are of course also conceivable. The filter in operation may receive a flow of liquid from the inside, for example. The liquid then emerges from the inlet at first into an inner chamber bounded by the filter and then passes through the filter to the outside into a region communicating with the outlet of the filter housing. Yet it is also possible for the filter in operation to receive a flow of liquid from the outside. The liquid from the inlet then passes at first through the filter from the outside and enters an internal chamber bounded by the filter. This internal chamber may then communicate with the outlet. The filter for example may comprise a fine sieve or the like, which retains the dirt particles contained in the liquid. The dirt particles are solid particles, especially fine solid particles. As already explained, this may involve mold sand from lost sand casting molds, for example, which were used in the making of engine components. When no more liquid is flowing through the liquid-conducting system, for example when the engine has been shut off, the dirt particles held back by the filter drop by gravity into a collecting chamber of the filter arrangement. The collecting chamber is preferably situated likewise in the filter housing. Looking in the flow direction of the liquid, the collecting chamber is situated upstream of the filter. The collecting chamber forms a dead space, i.e., a space not involved in the liquid flow when liquid is flowing through the filter arrangement. The dirt particles held back and having descended into the collecting chamber are thus not entrained by the liquid again flowing through the filter housing when the engine is restarted.

The filter arrangement according to the invention thus forms a combination of a filter fabric in the liquid flow and a suitable configuration, especially a labyrinth, which diverts dirt particles held back by the filter into the collecting chamber when the cooling fluid is motionless, where they are no longer caught up in the liquid flow and thus no longer get into the cooling liquid circuit. A clogging of the filter is prevented. At the same time, unwanted influences of the dirt particles on the liquid-conducting system, especially wear, leaks, and slackening cooling action, are reliably prevented.

The collecting chamber may form a blind hole. In operation, the collecting chamber may be filled at any time with standing liquid. In that case, liquid flowing through the filter arrangement does not enter the collecting chamber, but instead flows accordingly past the collecting chamber.

In the state of the filter arrangement in which the latter is installed in a liquid-conducting system, the collecting chamber may be located below the filter. Thus, no deflecting is needed for the dirt particles falling by gravity from the filter into the collecting chamber. This results in an especially simple and reliable collecting of the dirt particles in the collecting chamber.

The collecting chamber is separated from the flow path of the liquid through the filter arrangement by means of a covering. The covering is at least partly passable by the dirt particles. It further improves the retaining of the dirt particles in the collecting chamber.

According to one alternative of the claimed invention, the covering is designed as a sieve covering having a plurality of sieve openings for the dirt particles. Such a design, on the one hand, allows a reliable dropping of the dirt particles through the covering into the collecting chamber when the liquid is at rest, and on the other hand it reliably prevents an entraining of dirt particles from the collecting chamber when the liquid is (again) flowing through the filter arrangement.

The walls bounding the sieve openings extend tubularly beyond the covering on a lower side of the covering facing the collecting chamber. The tubular projections at the lower side of the covering do not prevent the dirt particles from dropping into the collecting chamber, but they further improve the retention of the dirt particles in the collecting chamber when liquid is again flowing across the covering.

According to another alternative of the claimed invention, the covering is designed as a lattice covering having a multiplicity of lattice slots for the dirt particles. The embodiment of the covering as a lattice covering in tum allows on the one hand a reliable dropping of the dirt particles through the covering into the collecting chamber when the liquid is at rest, and on the other hand it reliably prevents an entraining of dirt particles from the collecting chamber when the liquid is (again) flowing through the filter arrangement. In this regard, it should be mentioned that a combined sieve and lattice covering would also be basically conceivable, in which on the one hand a plurality of sieve openings and on the other hand a plurality of lattice slots are formed.

The lattice slots according to another embodiment may run perpendicularly to the flow direction of liquid coming from the inlet. Such a perpendicular orientation to the flow direction of the liquid further prevents an entraining of the dirt particles.

The side walls longitudinally bounding the lattice slots extend beyond the covering on a lower side of the covering facing the collecting chamber. The longitudinal walls are the long walls of the lattice slots. Basically, the transverse, i.e., short walls of the lattice slots could also extend beyond the lower side of the covering. The extending pieces of the side walls at the lower side of the covering, in turn, do not impede the dirt particles from dropping into the collecting chamber, but they prevent the further entraining of the dirt particles by the liquid flowing across the covering.

The side walls extending beyond the covering at the lower side of the covering, especially the longitudinal side walls, may be inclined in the flow direction of liquid coming from the inlet. The long-side side walls then form slanting fins which further prevent the entraining of dirt particles.

According to one unclaimed example, the covering may have a closed portion and an open portion, wherein, during operation of the filter arrangement, liquid flowing through the inlet into the filter housing overflows the closed portion, in particular, the closed portion is the first to be overflowed. The covering for example may have precisely one closed portion and precisely one open portion. But it is also possible to provide more than one closed portion and/or more than one open portion. The closed portion prevents the further entraining of dirt particles by the overflowing liquid.

According to another unclaimed example, the covering may have a ramp which conducts liquid flowing through the inlet into the filter housing away from the collecting chamber. In particular, the ramp rises in the direction of flow of the liquid overflowing the covering. In this way, liquid is taken away from the collecting chamber, for example, upward in the installed state of the filter arrangement. Swirling, etc., which might otherwise result in an entraining of dirt particles present in the collecting chamber, is prevented. The ramp, for example, may be arranged on a closed portion of the coveting, especially at the end of the closed portion facing toward the open portion.

According to one embodiment, the inlet at its end facing the filter housing may have at least one guide rib which conducts liquid flowing through the inlet into the filter housing away from the collecting chamber. The guide lib, for example, may be formed by a lower prolongation of the inlet. Also in this way liquid is conducted away from the collecting chamber, for example, upward in the installed state of the filter arrangement.

The invention also relates to a liquid-conducting system, preferably a cooling circuit of an engine, comprising at least one liquid line and a filter arrangement, which is arranged in the at least one liquid line, according to the invention. The liquid-conducting system may furthermore comprise the engine, especially the engine of a vehicle, such as a truck or car. As already explained, the engine may be an internal combustion engine or an electric motor, for example.

Sample embodiments of the invention shall be explained more closely below with the aid of figures. There are shown schematically:
- Fig. 1: a liquid-conducting system according to the invention in a perspective view,
- Fig. 2: a filter arrangement according to the invention in a first sample embodiment in a perspective view,
- Fig. 3: the filter arrangement of Figure 2 in an exploded view,
- Fig. 4: the filter arrangement of Figure 2 in a sectional view,
- Fig. 5: the covering of the filter arrangement of Figure 4 in a perspective view,
- Fig. 6: the representation of Figure 4 in another operating state of the filter arrangement,
- Fig. 7: a covering of the filter arrangement according to the invention in another sample embodiment in a perspective view,
- Fig. 8: the representation of Figure 6 with the covering shown in Fig. 7,
- Fig. 9: a covering of the filter arrangement according to one unclaimed embodiment in a perspective view,
- Fig. 10: the representation of Figure 6 with the covering shown in Fig. 9,
- Fig. 11: the representation of Figure 10 according to another sample embodiment,
- Fig. 12: a filter arrangement according to one unclaimed example in a perspective view,
- Fig. 13: the filter arrangement of Figure 12 in a sectional view, and
- Fig. 14: a portion of the filter arrangement shown in Fig. 12 and 13 in a perspective view.

Unless otherwise indicated, the same reference numbers in the figures denote the same objects.

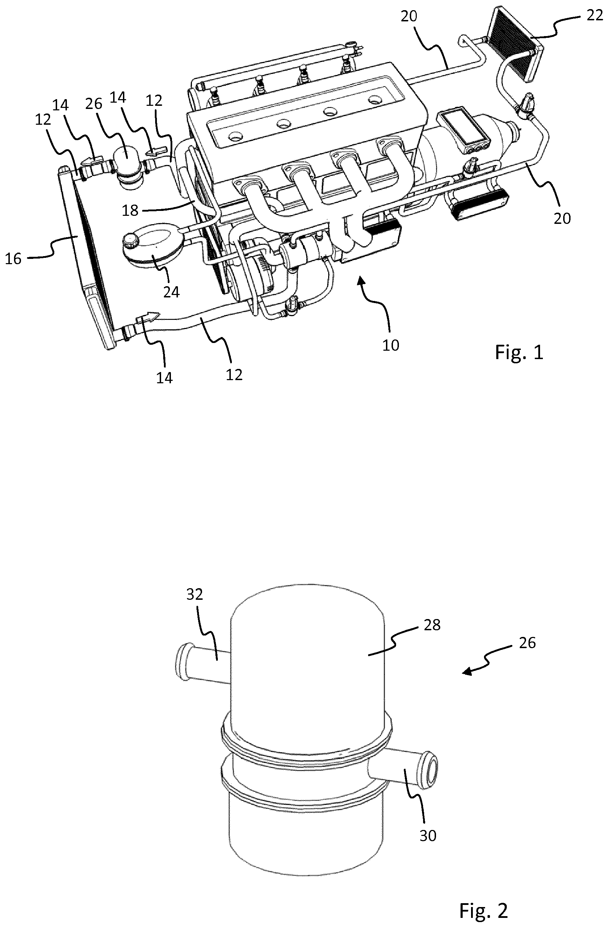

Figure 1 shows a liquid-conducting system according to the invention, in the example depicted a cooling circuit, in the condition hooked up to an engine 10, such as an internal combustion engine. The liquid-conducting system comprises a plurality of cooling lines 12, by which cooling liquid, being cooling water in the example shown, circulates through the engine 10 for the purpose of cooling, as indicated in Figure 1 by the arrows 14. Cooling liquid coming from the engine 10 is taken by the cooling lines 12 through a radiator 16 and back to the engine 10. By means of a thermostatic control valve, not otherwise shown, for example during a cold start phase of the engine 10, cooling liquid instead of passing through the radiator 16 can be taken by a bypass line 18 back to the engine 10 without going through the radiator 16. Furthermore, a portion of the cooling liquid heated by the engine 10 can be used to heat a passenger interior by additional liquid lines 20 via a heat exchanger 22. Reference 24 in Figure 1 furthermore shows an overflow tank for balancing out thermal volume changes.

In the cooling line 12 coming from the engine 10 there is furthermore situated a filter arrangement 26. The filter arrangement 26 shown in Figure 2 in an enlarged representation has a filter housing 28 as well as an inlet 30 and an outlet 32. The inlet 30 is connected at the right in Fig. 1 to the cooling line 12 arriving from the engine 10 and the outlet 32 is connected at the left in Fig. 1 to the cooling line 12 going to the radiator 16. In this way, the cooling liquid arriving from the engine 10 flows via the inlet 30 into the filter housing 28 and after flowing through the filter housing 28 it passes out again via the outlet 32.

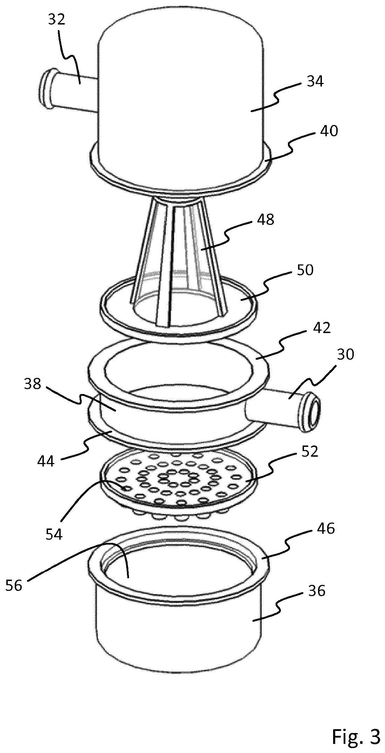

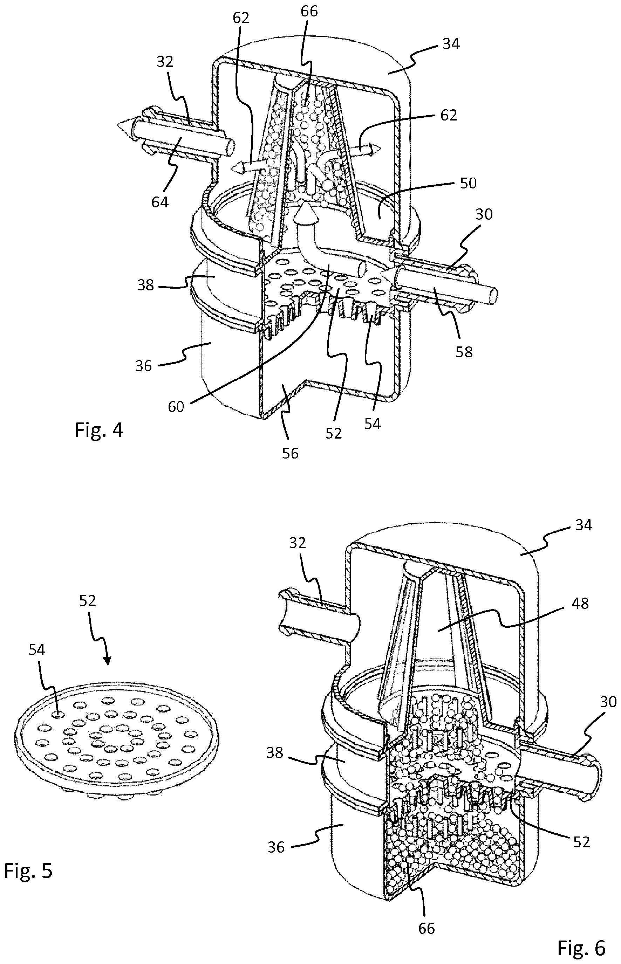

The layout of the filter arrangement 26 shall be explained more closely with the aid of Figure 3. The filter housing 28 is three-piece in the example shown. It has a top part 34 with the outlet 32, a bottom part 36 and a middle part 38 situated between the top part 34 and the bottom part 36 with the inlet 30. The top part 34, the middle part 38 and the bottom part 36 have respective connection flanges 40, 42, 44, 46, which can be recognized in Figure 3, by which they can be joined to each other, for example, by screwing. In the substantially cylindrical internal chamber bounded by the filter housing 28 is arranged a filter 48, which in the example shown has a conical shape. The filter 48 furthermore likewise has a connection flange 50, which in the mounted state is received between the connection flange 42 of the middle part 38 of the filter housing 28 and a fastening protrusion on the inner side of the top part 34 of the filter housing 28, as can be seen for example in Figure 4. The filter 48 in the mounted state thus protrudes into the top part 34 of the filter housing 28, as can likewise be seen in Figure 4. The filter arrangement furthermore comprises a covering 52, which is fashioned in the sample embodiment shown in Figures 3 to 6 as a sieve covering with a plurality of sieve openings 54. As can be seen in Figures 3 and 5 as well as the sectional views of Figures 4 and 6, the walls bounding the sieve openings extend in tubular fashion beyond the covering 52 at a lower side of the covering 52 facing toward the internal chamber of the lower part 36 of the filter housing 28. The bottom part 36 of the filter housing 28 forms a collecting chamber 56 for dirt particles filtered out by the filter 48 from the cooling liquid, such as molding sand.

The function of the filter arrangement depicted in Figures 2 to 6 shall be explained more closely below. In operation, cooling liquid flows from the engine 10 via the inlet 30 into the interior of the filter housing 28, as illustrated in Figure 4 by the arrow 58. The cooling liquid flows upward along the covering 52 into the internal chamber bounded by the filter 48, as illustrated by the arrow 60. After this, the cooling liquid passes through the filter 48 and is drained via the outlet 32, as illustrated by arrows 62 and 64 in Figure 4. In this process, dirt particles 66 present in the cooling liquid are held back by the filter 48. If the flow of cooling liquid through the filter arrangement 26 is then halted, for example, when the engine 10 is shut off, the dirt particles 66 drop by gravity and fall through the sieve openings 54 of the covering 52 into the collecting chamber 56 formed by the bottom part 36 of the filter housing 28, as can be seen in Figure 6. The collecting chamber 56 is filled permanently with cooling liquid. If a new flow of cooling liquid through the filter arrangement 26 then occurs, the dirt particles 66 present in the collecting chamber 56 are therefore not further entrained by the liquid flow on account of the embodiment of the covering 52. Thus, they remain in the collecting chamber 56, from which they can be removed for example during a servicing of the filter arrangement 26.

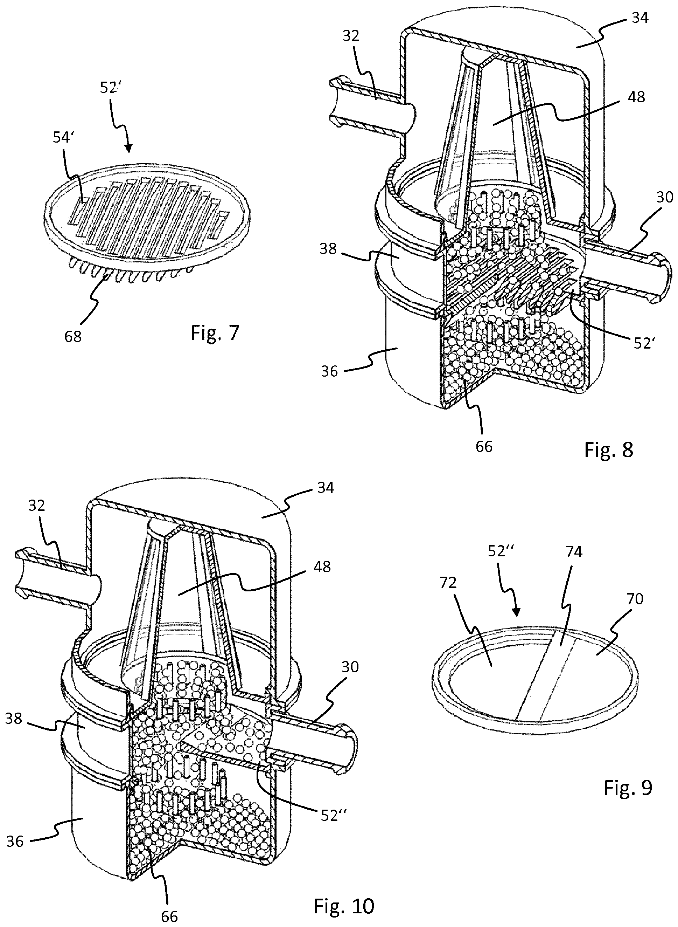

Figures 7 and 8 show another sample embodiment of the filter arrangement 26 according to the invention, which differs from the above described sample embodiment only in regard to the covering. The layout and the function of the filter arrangement 26 of Figures 7 and 8 are otherwise identical to the above remarks, so that reference is made to them. In the sample embodiment shown in Figures 7 and 8, the covering 52' is designed as a lattice covering with a plurality of lattice slots 54' for the dirt particles. In the mounted state, as can be seen in Figure 8, the lattice slots 54' run perpendicular to the flow direction of the cooling liquid coming from the inlet 30. Furthermore, it can be seen in Figures 7 and 8 that the longitudinal side walls bounding the lattice slots 54' extend beyond the covering 52' at the lower side of the covering 52' facing toward the collecting chamber 56. Further, it can be seen in Figures 7 and 8 that the side walls extending beyond the covering 52' at the lower side are slanting in the flow direction of cooling liquid coming from the inlet 30. The projecting side walls thus form slanting fins 68. Once again, the embodiment of the covering 52' further improves the retention of the dirt particles 66 in the collecting chamber 56.

Figures 9 and 10 show an unclaimed example of a filter arrangement, which differs from the sample embodiment shown in Figures 2 to 6 only in regard to the embodiment of the covering. Once again, this sample embodiment otherwise conforms in terms of arrangement and function of the filter arrangement 26 to the sample embodiment discussed above, so that once again reference is made to that. In the sample embodiment shown in Figures 9 and 10, the covering 52" has a closed portion 70 and an open portion 72. At the end facing toward the open portion 72, the closed portion 70 has a ramp 74, which in the mounted state conducts the cooling liquid flowing through the inlet 30 into the filter housing 28 away from the collecting chamber 56. In this embodiment, on the one hand the dropping of the dirt particles 66 down into the collecting chamber 56 is especially facilitated by the open portion 72. On the other hand, the closed portion 70 with the ramp 74 nevertheless reliably prevents dirt particles 66 from being entrained from the collecting chamber 56 upon renewed flow through the filter housing 28.

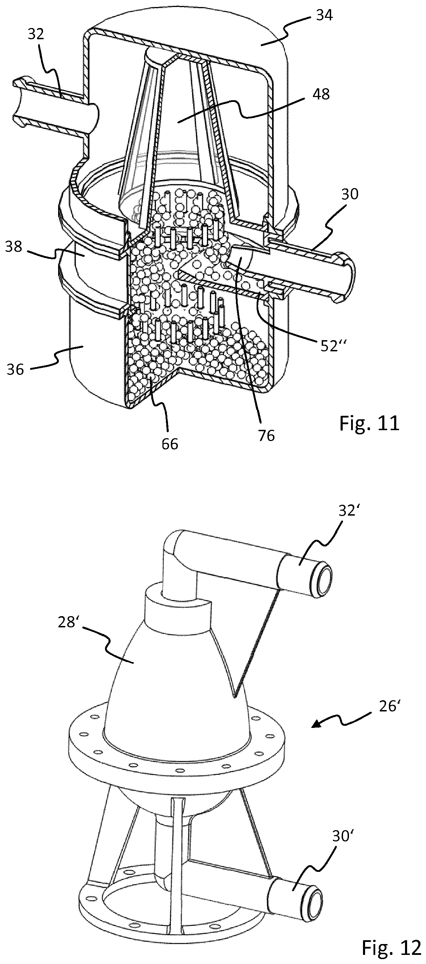

Figure 11 shows another example of a filter arrangement according to the invention, which in turn corresponds largely to the filter arrangement shown in Figures 9 and 10. The sample embodiment of Figure 11 differs from the sample embodiment of Figures 9 and 10 only in that the inlet 30 has a guide rib 76 at its end facing toward the filter housing 28, which carries away cooling liquid flowing through the inlet 30 into the filter housing 28 from the collecting chamber 56. This guide rib 76 further improves the channeling of the cooling liquid from the collecting chamber 56. It should be noted that the guide rib 76 could likewise be used in the sample embodiments discussed with the aid of Figures 2 to 10.

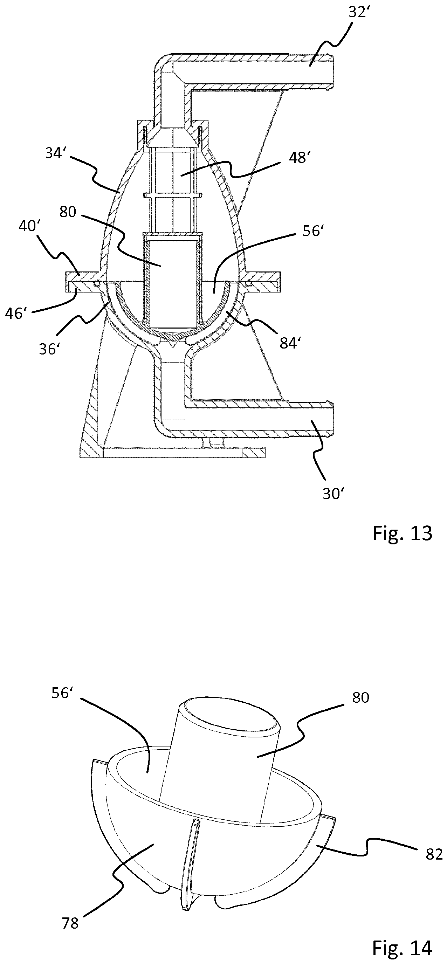

Figures 12 to 14 show another unclaimed example, where the filter arrangement 26' shown there could also be used in Figure 1 in place of the filter arrangement 26' shown there. The filter arrangement 26' also has a filter housing 28' with an inlet 30' and an outlet 32' for cooling liquid. The filter housing 28' in this example is two-piece, with a top part 34' and a bottom part 36', which once again are joined together by connection flanges 40', 46'. In the filter housing 28' there is arranged a cylindrical filter 48' in this example. In the bottom part 36' of the filter housing 28' is installed a spherical shell-shaped insert 78 with a central cylindrical protrusion 80, bounding a collecting chamber 56' at the inside. On the outside of the insert 78 are arranged ribs 82, forming in the mounted state flow regions 84 for cooling liquid coming from the inlet 30' in the bottom part 36' of the filter housing 28'

The function of the filter arrangement 26' shown in Figures 12 to 14 shall be explained more closely below. In operation, cooling liquid flows via the inlet 30' into the filter housing 28'. By the flow regions 84, the cooling liquid flows into the top part 34' and through the filter 48' from the outside and then via the outlet 32' out from the filter housing 28' once more. Once again, dirt particles contained in the cooling liquid are held back by the filter 48'. These then drop by gravity into the collecting chamber 56' when cooling liquid is no longer flowing, forming once again a dead space, so that when cooling liquid is flowing again the dirt particles contained there are not carried along. Even though not represented in Figures 12 to 14, the collecting chamber 56' may also be provided with a covering at its top end, which may be configured for example according to the coverings discussed above.

### List of reference numbers

- 10: Engine
- 12: Cooling lines
- 14: Arrows
- 16: Radiator
- 18: Bypass line
- 20: Liquid lines
- 22: Heat exchanger
- 24: Overflow tank
- 26/26': Filter arrangement
- 28/28': Filter housing
- 30/30': Inlet
- 32/32': Outlet
- 34/34': Top part
- 36/36': Bottom part
- 38: Middle part
- 40/40': Connection flange
- 42: Connection flange
- 44: Connection flange
- 46/46': Connection flange
- 48/48': Filter
- 50: Connection flange
- 52/52'/52": Covering
- 54: Sieve openings
- 54': Lattice slots
- 56/56': Collecting chamber
- 58: Arrow
- 60: Arrow
- 62: Arrows
- 64: Arrows
- 66: Dirt particles
- 68: Fins
- 70: Closed portion
- 72: Open portion
- 74: Ramp
- 76: Guide rib
- 78: Insert
- 80: Protrusion
- 82: Ribs
- 84: Flow regions

## Claims

1. A filter arrangement for a liquid-conducting system, preferably a cooling circuit of an engine (10), comprising a filter housing (28, 28') with an inlet (30, 30') and an outlet (32, 32') for liquid flowing along a flow path through the filter housing (28, 28'), furthermore comprising a filter (48, 48') which is arranged in the filter housing (28, 28') in the flow path of the liquid for filtering dirt particles (66) out of the liquid,
wherein a collecting chamber (56, 56') which is arranged upstream of the filter (48, 48') and into which dirt particles (66) which are filtered out by the filter (48, 48') drop because of gravity when liquid no longer flows through the filter housing (28, 28'), wherein the collecting chamber (56, 56') forms a dead space, and therefore dirt particles (66) located in the collecting chamber (56, 56') are not entrained by liquid flowing through the filter housing (28, 28'),
wherein the collecting chamber (56, 56') is separated from the flow path of the liquid by means of a covering (52, 52', 52"),
wherein
a) the covering (52) is designed as a sieve covering (52) having a multiplicity of sieve openings (54) for the dirt particles (66) and the walls bounding the sieve openings (54) extend tubularly beyond the covering (52) on a lower side of the covering (52) facing the collecting chamber (56, 56'); or
b) wherein the covering (52') is designed as a lattice covering (52') having a multiplicity of lattice slots (54') for the dirt particles (66), wherein the side walls longitudinally bounding the lattice slots (54') extend beyond the covering (52') on a lower side of the covering (52') facing the collecting chamber (56, 56').

2. The filter arrangement as claimed in claim 1, alternative b), wherein the lattice slots (54') run perpendicularly to the flow direction of liquid coming from the inlet (30, 30').

3. The filter arrangement as claimed in claim 1, alternative b), wherein the side walls extending beyond the covering (52') on the lower side of the covering (52') are inclined in the flow direction of liquid coming from the inlet (30, 30').

4. The filter arrangement as claimed in one of the preceding claims, wherein the covering (52") has a closed portion (70) and an open portion (72), wherein, during operation of the filter arrangement (26, 26'), liquid flowing through the inlet (30, 30') into the filter housing (28, 28') overflows the closed portion (70).

5. The filter arrangement as claimed in one of the preceding claims, wherein the covering (52") has a ramp (74) which conducts liquid flowing through the inlet (30, 30') into the filter housing (28, 28') away from the collecting chamber (56, 56').

6. The filter arrangement as claimed in one of the preceding claims, wherein the inlet (30, 30') at its end facing the filter housing (28, 28') has at least one guide rib (76) which conducts liquid flowing through the inlet (30, 30') into the filter housing (28, 28') away from the collecting chamber (56, 56').

7. A liquid-conducting system, preferably cooling circuit of an engine (10), comprising at least one liquid line (12) and a filter arrangement (26, 26'), which is arranged in the at least one liquid line (12), as claimed in one of the preceding claims.

8. The liquid-conducting system as claimed in claim 7, wherein it furthermore comprises the engine (10).

## Patentansprüche

1. Filteranordnung für ein Flüssigkeitsleitungssystem, vorzugsweise einen Kühlkreis einer Kraftmaschine (10), umfassend ein Filtergehäuse (28, 28') mit einem Einlass (30, 30') und einem Auslass (32, 32') für Flüssigkeit, die entlang eines Strömungspfads durch das Filtergehäuse (28, 28') strömt, ferner umfassend einen Filter (48, 48'), der im Filtergehäuse (28, 28') im Strömungspfad der Flüssigkeit angeordnet ist zum Herausfiltern von Schmutzpartikeln (66) aus der Flüssigkeit,
wobei eine Sammelkammer (56, 56'), die stromaufwärts des Filters (48, 48') angeordnet ist und in die Schmutzpartikel (66), die durch den Filter (48, 48') herausgefiltert werden, aufgrund von Schwerkraft fallen, wenn Flüssigkeit nicht länger durch das Filtergehäuse (28, 28') strömt, wobei die Sammelkammer (56, 56') einen toten Raum bildet, und weswegen Schmutzpartikel (66), die sich in der Sammelkammer (56, 56') befinden, nicht durch Flüssigkeit, die durch das Filtergehäuse (28, 28') strömt, mitgerissen werden,
wobei die Sammelkammer (56, 56') vom Strömungspfad der Flüssigkeit mittels einer Abdeckung (52, 52', 52") getrennt ist, wobei
a) die Abdeckung (52) als eine Siebabdeckung (52) mit mehreren Sieböffnungen (54) für die Schmutzpartikel (66) konzipiert ist und wobei sich die Wände, die die Sieböffnungen (54) begrenzen, röhrenartig über die Abdeckung (52) auf einer unteren Seite der Abdeckung (52), die zur Sammelkammer (56, 56') zeigt, hinaus erstrecken; oder
b) wobei die Abdeckung (52') als eine Gitterabdeckung (52') mit mehreren Gitterschlitzen (54') für die Schmutzpartikel (66) konzipiert ist, wobei sich die Seitenwände, die die Gitterschlitze (54') längs begrenzen, über die Abdeckung (52') an einer unteren Seite der Abdeckung (52'), die zur Sammelkammer (56, 56') zeigt, hinaus erstrecken.

2. Filteranordnung nach Anspruch 1, Alternative b), wobei die Gitterschlitze (54') senkrecht zur Strömungsrichtung der vom Einlass (30, 30') kommenden Flüssigkeit verlaufen.

3. Filteranordnung nach Anspruch 1, Alternative b), wobei die Seitenwände, die sich über die Abdeckung (52') an der unteren Seite der Abdeckung (52') hinaus erstrecken, in der Strömungsrichtung der vom Einlass (30, 30') kommenden Flüssigkeit geneigt sind.

4. Filteranordnung nach einem der vorhergehenden Ansprüche, wobei die Abdeckung (52") einen geschlossenen Teil (70) und einen offenen Teil (72) aufweist, wobei, während des Betriebs der Filteranordnung (26, 26'), Flüssigkeit, die durch den Einlass (30, 30') in das Filtergehäuse (28, 28') strömt, den geschlossenen Teil (70) überströmt.

5. Filteranordnung nach einem der vorhergehenden Ansprüche, wobei die Abdeckung (52") eine Rampe (74) aufweist, die Flüssigkeit, die durch den Einlass (30, 30') in das Filtergehäuse (28, 28') strömt, von der Sammelkammer (56, 56') weg leitet.

6. Filteranordnung nach einem der vorhergehenden Ansprüche, wobei der Einlass (30, 30') an seinem zum Filtergehäuse (28, 28') zeigenden Ende zumindest eine Führungsrippe (76) aufweist, die Flüssigkeit, die durch den Einlass (30, 30') in das Filtergehäuse (28, 28') strömt, von der Sammelkammer (56, 56') weg leitet.

7. Flüssigkeitsleitungssystem, vorzugsweise ein Kühlkreis einer Kraftmaschine (10), umfassend zumindest eine Flüssigkeitsleitung (12) und eine Filteranordnung (26, 26'), die in der zumindest einen Flüssigkeitsleitung (12) angeordnet ist, nach einem der vorhergehenden Ansprüche.

8. Flüssigkeitsleitungssystem nach Anspruch 7, wobei dies ferner die Kraftmaschine (10) umfasst.

## Revendications

1. Agencement de filtre pour un système d'acheminement de liquide, de préférence un circuit de refroidissement d'un moteur (10), comprenant un boîtier de filtre (28, 28') avec une entrée (30, 30') et une sortie (32, 32') pour un liquide s'écoulant le long d'un passage à travers le boîtier de filtre (28, 28'), comprenant en outre un filtre (48, 48') qui est disposé dans le boîtier de filtre (28, 28') dans le passage du liquide pour éliminer par filtration des particules de saleté (66) du liquide,
dans lequel une chambre de collecte (56, 56') qui est disposée en amont du filtre (48, 48') et à l'intérieur de laquelle des particules de saleté (66) qui sont éliminées par filtration par le filtre (48, 48') tombent par gravité quand plus aucun liquide ne s'écoule à travers le boîtier de filtre (28, 28'), dans lequel la chambre de collecte (56, 56') forme un volume mort, et par conséquent des particules de saleté (66) situées dans la chambre de collecte (56, 56') ne sont pas entraînées par un liquide s'écoulant à travers le boîtier de filtre (28, 28'),
dans lequel la chambre de collecte (56, 56') est séparée du passage du liquide au moyen d'un couvercle (52, 52', 52"),
dans lequel
a) le couvercle (52) est conçu comme un couvercle à tamis (52) ayant une multiplicité d'ouvertures de tamis (54) pour les particules de saleté (66) et les parois délimitant les ouvertures de tamis (54) s'étendent tubulairement au-delà du couvercle (52) sur un côté inférieur du couvercle (52) faisant face à la chambre de collecte (56, 56') ; ou
b) dans lequel le couvercle (52') est conçu comme un couvercle à treillis (52') ayant une multiplicité de fentes de treillis (54') pour les particules de saleté (66), les parois latérales délimitant longitudinalement les fentes de treillis (54') s'étendant au-delà du couvercle (52') sur un côté inférieur du couvercle (52') faisant face à la chambre de collecte (56, 56').

2. Agencement de filtre selon la revendication 1, variante b),
dans lequel les fentes de treillis (54') courent perpendiculairement à la direction d'écoulement d'un liquide venant de l'entrée (30, 30').

3. Agencement de filtre selon la revendication 1, variante b),
dans lequel les parois latérales s'étendant au-delà du couvercle (52') sur le côté inférieur du couvercle (52') sont inclinées dans la direction d'écoulement d'un liquide venant de l'entrée (30, 30').

4. Agencement de filtre selon une des revendications précédentes,
dans lequel le couvercle (52") a une partie fermée (70) et partie ouverte (72), dans lequel, pendant le fonctionnement de l'agencement de filtre (26, 26'), un liquide s'écoulant par l'entrée (30, 30') à l'intérieur du boîtier de filtre (28, 28') submerge la partie fermée (70) .

5. Agencement de filtre selon une des revendications précédentes,
dans lequel le couvercle (52") a une rampe (74) qui achemine un liquide s'écoulant par l'entrée (30, 30') à l'intérieur du boîtier de filtre (28, 28') loin de la chambre de collecte (56, 56').

6. Agencement de filtre selon une des revendications précédentes,
dans lequel l'entrée (30, 30'), à son extrémité faisant face au boîtier de filtre (28, 28'), a au moins une nervure de guidage (76) qui achemine un liquide s'écoulant par l'entrée (30, 30') à l'intérieur du boîtier de filtre (28, 28') loin de la chambre de collecte (56, 56').

7. Système d'acheminement de liquide, de préférence circuit de refroidissement d'un moteur (10), comprenant au moins une conduite de liquide (12) et un agencement de filtre (26, 26'), qui est disposé dans l'au moins une conduite de liquide (12), selon une des revendications précédentes.

8. Système d'acheminement de liquide selon la revendication 7, qui comprend en outre le moteur (10).
